# EUROPÄISCHE PATENTSCHRIFT

(11) **EP 0 690 976 B1**
(45) Veröffentlichungstag und Bekanntmachung des Hinweises auf die Patenterteilung: **20.06.2001**
(21) Anmeldenummer: 95906978.2
(22) Anmeldetag: 19.01.1995
(51) Int. Cl.: G01F 23/28, G01F 25/00

(54) **VERFAHREN UND ANORDNUNG ZUR FESTSTELLUNG UND/ODER ÜBERWACHUNG EINES VORBESTIMMTEN FÜLLSTANDS IN EINEM BEHÄLTER**
METHOD AND DEVICE FOR DETERMINING WHEN THE CONTENTS OF A CONTAINER REACH A GIVEN LEVEL AND/OR FOR MONITORING THIS LEVEL
PROCEDE ET SYSTEME PERMETTANT DE CONSTATER ET/OU DE CONTROLER UN NIVEAU DE REMPLISSAGE PREDETERMINE D'UN RESERVOIR

(30) Priorität: 26.01.1994 DE 4402234
(43) Veröffentlichungstag der Anmeldung: 10.01.1996
(73) Patentinhaber: Endress + Hauser GmbH + Co., 79689 Maulburg (DE)
(72) Erfinder: DREYER, Volker, D-79541 Lörrach (DE)
(74) Vertreter: Leiser, Gottfried, Dipl.-Ing.
(86) Internationale Anmeldenummer: EP9500195
(87) Internationale Veröffentlichungsnummer: WO9520749

(56) Entgegenhaltungen:
- EP-A- 0 494 398
- WO-A-94/08215
- DE-A- 3 810 669
- DE-A- 4 232 719
- FR-A- 2 553 189
- FR-A- 2 572 519

## Beschreibung

Die Erfindung betrifft ein Verfahren zur Feststellung und/oder Überwachung eines vorbestimmten Füllstands in einem Behälter mit Hilfe eines Füllstandssensors, der ein mechanisches Schwingsystem, einen elektromechanischen Erregungswandler und einen elektromechanischen Empfangswandler enthält, wobei das mechanische Schwingsystem auf der Höhe des vorbestimmten Füllstands so angebracht ist, daß es mit dem Füllgut in Berührung kommt, wenn dieses den vorbestimmten Füllstand erreicht, und wobei der Empfangswandler mit dem Eingang einer Verstärkerschaltung verbunden ist, an deren Ausgang der Erregungswandler angeschlossen ist und die so ausgebildet ist, daß das mechanische Schwingsystem zu Schwingungen mit seiner Eigenresonanzfrequenz erregt wird, und mit einer an den Ausgang der Verstärkerschaltung angeschlossenen Auswerteschaltung zur Auslösung von Anzeige- und/oder Schaltvorgängen in Abhängigkeit von der Frequenz des Ausgangssignals der Verstärkerschaltung, sowie eine Anordnung zur Durchführung des Verfahrens.

Ein Verfahren dieser Art ist aus der DE-OS 33 36 991 bekannt, wobei das mechanische Schwingsystem zwei an einer Membran befestigte Schwingstäbe aufweist, die in gegensinnige Schwingungen versetzt werden. Wenn das Schwingsystem in Luft schwingt, hat es eine höhere Eigenresonanzfrequenz als wenn es mit dem Füllgut in Berührung steht. Diese Erscheinung wird zur Feststellung und/oder Überwachung des vorbestimmten Füllstands ausgenutzt.Die Auswerteschaltung vergleicht die Augenblicksfrequenz des Ausgangssignals der Verstärkerschaltung, die ja stets gleich der momentanen Eigenresonanzfrequenz des mechanischen Schwingsystems ist, mit einer Nennfrequenz, die gleich der Eigenresonanzfrequenz ist, die das Schwingsystem hat, wenn es in Luft schwingt, und die beispielsweise bei der Herstellung oder beim Einbau des Füllstandssensors aufgenommen wird. Wenn diese Augenblicksfrequenz um mehr als einen vorbestimmten Differenzbetrag niedriger als die Nennfrequenz ist, wird angenommen, daß das mechanische Schwingsystem mit dem Füllgut in Berührung steht, daß also der zu überwachende Füllstand im Behälter erreicht oder überschritten ist, während im anderen Fall angenommen wird, daß das mechanische Schwingsystem in Luft schwingt, daß also der zu überwachende Füllstand im Behälter nicht erreicht ist.

Die Auswerteschaltung kann aus der von ihr bestimmten Frequenz auch gewisse Fehler der Füllstandsüberwachungsanordnung erkennen. Wenn die gemessene Frequenz Null ist, liegt ein Totalausfall des Geräts vor. Wenn die gemessene Frequenz wesentlich höher ist als die Nennfrequenz, besteht der Verdacht, daß die Schwingstäbe durch Korrosion oder Abriß verkürzt sind. In solchen Fällen kann die Auswerteschaltung ein Alarmsignal ausgeben.

Es gibt jedoch auch Fehler, die auf diese Weise nicht feststellbar sind, weil sie zu Frequenzwerten führen können, die innerhalb des Bereichs der möglichen Frequenzwerte liegen. Solche Fehler können beispielsweise durch Langzeitänderungen (Driften) und Alterungserscheinungen der Bauteile des Sensors und der Schaltungselemente der elektronischen Schaltungsanordnung verursacht werden. Wenn durch einen solchen Fehler die Schwingungsfrequenz des Sensors verringert wird, kann es sein, daß die Auswerteschaltung fälschlicherweise anzeigt, daß die Schwingstäbe von dem Füllstand bedeckt sind, also der vorbestimmte Füllstand erreicht ist, obwohl die Schwingstäbe in Wirklichkeit in Luft schwingen. Wenn umgekehrt durch einen solchen Fehler die Schwingungsfrequenz des Sensors erhöht wird, kann die Auswerteschaltung fälschlicherweise anzeigen, daß die Schwingstäbe in Luft schwingen, also der vorbestimmte Füllstand nicht erreicht ist, obwohl die Schwingstäbe in Wirklichkeit von dem Füllgut bedeckt sind.

Aufgabe der Erfindung ist die Schaffung eines Verfahrens der eingangs angegebenen Art, mit dem auch Fehler feststellbar sind, die aus der Größe der gemessenen Frequenz nicht erkennbar sind, sowie einer Anordnung zur Durchführung des Verfahrens.

Zur Lösung dieser Aufgabe ist das Verfahren nach der Erfindung dadurch gekennzeichnet, daß die Verbindung zwischen dem Ausgang der Verstärkerschaltung und dem Erregungswandler während vorbestimmter Testintervalle kurzzeitig unterbrochen wird und daß in jedem Testintervall zwischen dem Ausgangssignal der Verstärkerschaltung und einem am Erregungswandler abgegriffenen Signal ein Phasenvergleich zur Erkennung von Fehlern in der Meßlinie durchgeführt wird.

Die mit diesem Verfahren erzielte Wirkung beruht darauf, daß nach der Unterbrechung der Verbindung zwischen dem Ausgang der Verstärkerschaltung und dem Erregungswandler im Testintervall die Schwingungen des mechanischen Schwingsystems nicht sofort aufhören, sondern allmählich abklingen, wobei jedoch dann der Erregungswandler ebenfalls als Empfangswandler arbeitet und die mechanischen Schwingungen in ein elektrisches Ausgangssignal umwandelt. Während im normalen Meßbetrieb das von der Verstärkerschaltung zum Erregungswandler gelieferte Erregungssignal gegen das vom Empfangswandler gelieferte Empfangssignal um 90° phasenverschoben ist, damit die Selbsterregungsbedingung erfüllt ist, sind im Testintervall die von den beiden Wandlern gelieferten Signale phasengleich. Je nach dem Aufbau der Schaltung gibt es eine vorbestimmte Phasenbeziehung, die im Testintervall zwischen dem Ausgangssignal der Verstärkerschaltung und dem am Erregungswandler abgegriffenen Signal bestehen muß, wenn die Anordnung fehlerfrei ist. Aus der Nichteinhaltung dieser Phasenbeziehung sowie gegebenenfalls aus der Größe der festgestellten Phasenabweichung können Fehler der Anordnung erkannt und identifiziert werden.

Eine Anordnung zur Durchführung des Verfahrens mit einem Füllstandssensor, der ein mechanisches Schwingungsgebilde, einen elektromechanischen Erregungswandler und einen elektromechanischen Empfangswandler enthält, wobei das mechanische Schwingungsgebilde auf der Höhe des vorbestimmten Füllstands so angebracht ist, daß es mit dem Füllgut in Berührung kommt, wenn dieses den vorbestimmten Füllstand erreicht, und wobei der Empfangswandler mit dem Eingang einer Verstärkerschaltung verbunden ist, an deren Ausgang der Erregungswandler angeschlossen ist und die so ausgebildet ist, daß das mechanische Schwingungsgebilde zu Schwingungen mit seiner Eigenresonanzfrequenz erregt wird, und mit einer an den Ausgang der Verstärkerschaltung angeschlossenen Auswerteschaltung zur Auslösung von Anzeige- und/oder Schaltvorgängen in Abhängigkeit von der Frequenz des Ausgangssignals der Verstärkerschaltung, ist nach der Erfindung dadurch gekennzeichnet, daß in die Verbindung zwischen dem Ausgang der Verstärkerschaltung und dem Erregungswandler ein Schalter eingefügt ist, daß eine Steuerschaltung vorgesehen ist, die den Schalter während vorbestimmter Testintervalle kurzzeitig öffnet, und daß die Auswerteschaltung so ausgebildet ist, daß sie in jedem Testintervall zwischen dem Ausgangssignal der Verstärkerschaltung und einem am Erregungswandler abgegriffenen Signal einen Phasenvergleich zur Erkennung von Fehlern in der Meßlinie durchführt.

Weitere Merkmale und Vorteile der Erfindung ergeben sich aus der folgenden Beschreibung von Ausführungsbeispielen an Hand der Zeichnungen. In den Zeichnungen zeigen:
- Fig. 1: das Blockschaltbild einer Anordnung zur Feststellung und/oder Überwachung eines vorbestimmten Füllstands in einem Behälter gemäß einem Ausführungsbeispiel der Erfindung,
- Fig. 2: Zeitdiagramme von Signalen, die in der Anordnung von Fig. 1 vorkommen,
- Fig. 3: das Blockschaltbild einer abgeänderten Ausführungsform der Anordnung von Fig. 1 und
- Fig. 4: Zeitdiagramme von Signalen, die in der Anordnung von Fig. 3 vorkommen,

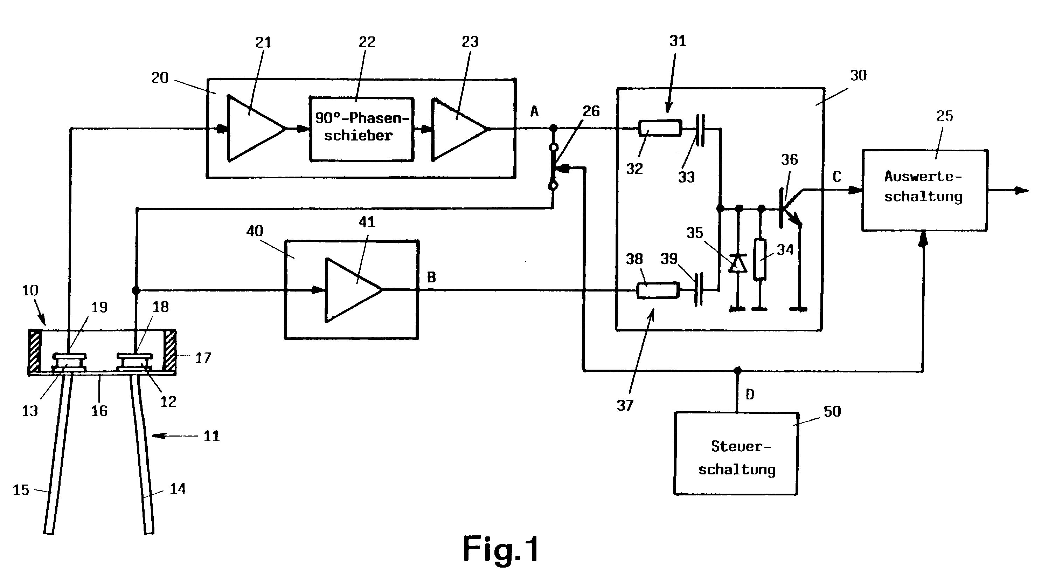

Fig. 1 der Zeichnung zeigt einen Füllstandssensor 10 mit einem mechanischen Schwingsystem 11, einem elektromechanischen Erregungswandler 12 und einem elektromechanischen Emp fangswandler 13. Das mechanische Schwingsystem 11 besteht bei dem dargestellten Beispiel aus zwei Schwingstäben 14 und 15, die jeweils mit einem Ende an einer gemeinsamen Membran 16 befestigt sind, die rings um ihren Umfangsrand mit einem ringförmigen Einschraubstück 17 verbunden ist. Jeder der beiden elektromechanischen Wandler 12, 13 ist so ausgebildet, daß er ein zugeführtes elektrisches Wechselsignal (Wechselspannung oder Wechselstrom) in eine mechanische Schwingung und umgekehrt eine auf ihn einwirkende mechanische Schwingung in ein elektrisches Wechselsignal umwandeln kann. Als Beispiel ist angenommen, daß jeder Wandler 12, 13 ein piezoelektrischer Wandler ist, der wenigstens ein piezoelektrisches Element enthält. Ein solches piezoelektrisches Element besteht bekanntlich aus einem scheibenförmigen Piezokristall, der zwischen zwei Elektroden angeordnet ist. Die Dicke des Piezokristalls ändert sich in Abhängigkeit von der an die Elektroden angelegten Spannung, und umgekehrt erzeugen mechanisch erzwungene Dickenänderungen eine elektrische Spannung an den Elektroden. Der Erregungswandler 12 ist so mit der Membran 16 verbunden, daß er aufgrund der Dickenschwingungen seines Piezokristalls, die beim Anlegen einer elektrischen Wechselspannung erzeugt werden, die Membran in Schwingungen versetzt, die auf die beiden Schwingstäbe übertragen werden, so daß diese Schwingstäbe gegensinnige mechanische Schwingungen quer zu ihrer Längsrichtung ausführen. Der Empfangswandler 13 ist so mit der Membran 16 verbunden, daß aufgrund der mechanischen Schwingungen der Membran und der Schwingstäbe eine elektrische Wechselspannung zwischen seinen beiden Elektroden erzeugt wird.

Jeweils eine Elektrode jedes der beiden Wandler 12, 13 ist mit einem Masseanschluß verbunden, der beispielsweise durch die Membran 16 und das Einschraubstück 17 gebildet sein kann. Die anderen Elektroden bilden einen Anschluß 18 für den Erregungswandler 12 bzw. einen Anschluß 19 für den Empfangswandler 13. Der Anschluß 19 des Empfangswandlers 13 ist mit dem Eingang einer Verstärkerschaltung 20 verbunden, an deren Ausgang der Anschluß 18 des Erregungswandlers 12 angeschlossen ist. Somit liegt der Füllstandssensor 10 mit den beiden Wandlern 12, 13, die über das mechanische Schwingsystem 11 miteinander gekoppelt sind, im Rückkopplungskreis der Verstärkerschaltung 20. Die Verstärkerschaltung 20 ist so ausgebildet, daß die Selbsterregungsbedingung erfüllt ist, so daß das mechanische Schwingsystem 11 über die beiden Wandler 12 und 13 zu Schwingungen mit seiner Eigenresonanzfrequenz angeregt wird. Zu diesem Zweck enthält die Verstärkerschaltung 20 einen Vorverstärker 21, der das Ausgangssignal des Empfangswandlers 13 verstärkt, einen 90°-Phasenschieber 22, der dem Ausgangssignal des Vorverstärkers 21 eine Phasendrehung um 90° erteilt, und einen Endverstärker 23, der am Ausgang eine Wechselspannung mit der richtigen Frequenz, Phasenlage und Amplitude für die Aufrechterhaltung der Schwingungen des mechanischen Schwingsystems 11 liefert.

Zur Feststellung, ob ein Füllgut in einem Behälter einen vorbestimmten Füllstand erreicht hat, wird der Füllstandssensor 10 in bekannter Weise an dem Behälter so angebracht, daß die beiden Schwingstäbe 14, 15 mit dem Füllgut in Berührung kommen, wenn dieses den vorbestimmten Füllstand erreicht. Wenn der vorbestimmte Füllstand im Behälter nicht erreicht ist, schwingen die beiden Schwingstäbe 14, 15 in Luft. In diesem Fall hat die Eigenresonanzfrequenz des mechanischen Schwingsystems 11 einen bekannten Wert, der beispielsweise 420 Hz betragen kann. Wenn dagegen die beiden Schwingstäbe 11 und 12 mit dem Füllgut in Berührung kommen, nimmt die Eigenresonanzfrequenz des mechanischen Schwingsystems ab; sie beträgt beispielsweise etwa 340 Hz, wenn die beiden Schwingstäbe vollständig von dem Füllgut bedeckt sind. An Hand der Frequenz des Ausgangssignals der Verstärkeranordnung 20, die ja stets mit der Schwingungsfrequenz des mechanischen Schwingsystems 11 übereinstimmt, kann dann festgestellt werden, ob das Füllgut im Behälter den vorbestimmten Füllstand erreicht hat oder nicht. Diese Feststellung erfolgt durch eine Auswerteschaltung 25.

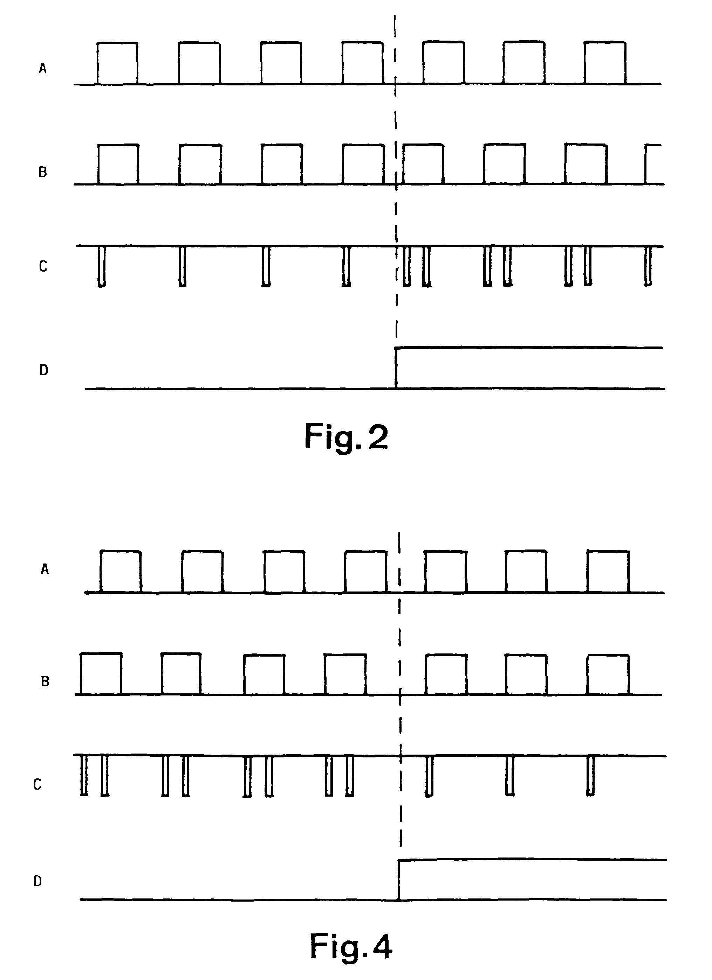

Einer üblichen Bauart entsprechend ist der Endverstärker 23 ein Begrenzerverstärker, der am Ausgang eine Rechteckspannung abgibt, wie sie im Diagramm A von Fig. 2 dargestellt ist. Zur Vereinfachung ist die Rechteckspannung gleichfalls mit dem Buchstaben A bezeichnet. Die Rechteckspannung A wird dem Anschluß 18 des Erregungswandlers 12 zugeführt. Die gleiche Rechteckspannung A wird auch einem Eingang einer Differenzierschaltung 30 zugeführt, die die Rechteckspannung A in eine Impulsfolge umwandelt, deren Impulsfolgefrequenz gleich der Frequenz der Rechteckspannung ist. Zu diesem Zweck enthält die Differenzierschaltung 30 ein Differenzierglied 31, das aus der Reihenschaltung eines Widerstands 32 und eines Kondensators 33 gebildet ist. Das Differenzierglied 31 liegt in Reihe mit einem Widerstand 34, dem eine Diode 35 parallelgeschaltet ist, zwischen dem Ausgang der Verstärkerschaltung 20 und Masse. Der Verbindungspunkt zwischen dem Differenzierglied 31 und der Parallelschaltung 33-34 ist mit der Basis eines Transistors 36 verbunden, dessen Emitter an Masse liegt. Der Kollektor des Transistors 36 bildet den Ausgang der Differenzierschaltung 30, der mit dem Eingang der Auswerteschaltung 25 verbunden ist.

Das Differenzierglied 31 erzeugt für jede Flanke des Rechtecksignals A einen kurzen Impuls, wobei diese Impulse abwechselnd positiv und negativ gerichtet sind. Der normalerweise gesperrte Transistor 36 wird durch jeden positiv gerichteten Impuls kurzzeitig stromführend, während negativ gerichtete Impulse ohne Wirkung bleiben, so daß an dem durch den Kollektor gebildeten Ausgang die im linken Teil des Diagramms C von Fig. 2 dargestellte Folge von negativ gerichteten kurzen Impulsen entsteht, die zeitlich mit den aufsteigenden Flanken des Rechtecksignals A übereinstimmen. Diese Impulsfolge C wird der Auswerteschaltung 25 zugeführt, die daraus auf einfache Weise die Frequenz des Rechtecksignals A bestimmen kann, beispielsweise durch Abzählen der in vorbestimmten Zeitintervallen auftretenden Impulse. Die gemessene Frequenz wird mit einer Nennfrequenz verglichen, die in der Auswerteschaltung 25 gespeichert ist. Diese Nennfrequenz ist die Eigenresonanzfrequenz, die der Füllstandssensor 11 im einwandfreien Zustand beim Schwingen in Luft hat und die beispielsweise bei der Herstellung oder beim Einbau des Füllstandssensors gemessen worden ist. Durch den Vergleich kann die Auswerteschaltung dann feststellen, ob der vorbestimmte Füllstand im Behälter erreicht ist oder nicht. Wenn die ermittelte Frequenz des Rechtecksignals A einen Schwellenwert nicht erreicht, der beispielsweise etwa 10 % unter der Nennfrequenz liegt, wird angenommen, daß die Schwingstäbe des Füllstandssensors von dem Füllgut bedeckt sind; wenn dagegen der Schwellenwert überschritten ist, wird angenommen, daß die Schwingstäbe in Luft schwingen.

Die Auswerteschaltung kann aus der von ihr bestimmten Frequenz auch gewisse Fehler der Füllstandsüberwachungsanordnung erkennen. Wenn keine Impulse mehr ankommen, also die gemessene Frequenz Null ist, liegt ein Totalausfall des Geräts vor. Wenn die gemessene Frequenz wesentlich höher ist als die Nennfrequenz, besteht der Verdacht, daß die Schwingstäbe durch Korrosion oder Abriß verkürzt sind. In solchen Fällen kann die Auswerteschaltung ein Alarmsignal ausgeben.- Es gibt jedoch auch Fehler, die auf diese Weise nicht feststellbar sind, weil sie zu Frequenzwerten führen können, die innerhalb des Bereichs der möglichen Frequenzwerte liegen. Solche Fehler können beispielsweise durch Langzeitänderungen (Driften) und Alterungserscheinungen der Bauteile des Sensors und der Schaltungselemente der elektronischen Schaltungsanordnung verursacht werden. Wenn durch einen solchen Fehler die Schwingungsfrequenz des Sensors verringert wird, kann es sein, daß die Auswerteschaltung fälschlicherweise anzeigt, daß die Schwingstäbe von dem Füllstand bedeckt sind, also der vorbestimmte Füllstand erreicht ist, obwohl die Schwingstäbe in Wirklichkeit in Luft schwingen. Wenn umgekehrt durch einen solchen Fehler die Schwingungsfrequenz des Sensors erhöht wird, kann die Auswerteschaltung fälschlicherweise anzeigen, daß die Schwingstäbe in Luft schwingen, also der vorbestimmte Füllstand nicht erreicht ist, obwohl die Schwingstäbe in Wirklichkeit von dem Füllgut bedeckt sind.

Damit auch solche Fehler festgestellt werden können, ist bei der Schaltungsanordnung von Fig. 1 in die Verbindung zwischen dem Ausgang der Verstärkerschaltung 20 und dem Anschluß 18 des Erregungswandlers 12 ein Schalter 26 eingefügt, und der Anschluß 18 ist mit dem Eingang einer zweiten Verstärkerschaltung 40 verbunden, an deren Ausgang ein zweiter Eingang der Differenzierschaltung 30 angeschlossen ist. Die Verstärkerschaltung 40 enthält bei dem Ausführungsbeispiel von Fig. 1 nur einen Verstärker 41, der in gleicher Weise wie der Endverstärker 23 der Verstärkerschaltung 20 als Begrenzerverstärker ausgebildet ist und am Ausgang ein Rechtecksignal B abgibt, das mit dem am Anschluß 18 bestehenden Wechselspannungssignal phasengleich ist. Dieses Rechtecksignal B, das im Diagramm B von Fig. 2 dargestellt ist, wird in der Differenzierschaltung 30 durch ein zweites Differenzierglied 37, das aus einem Widerstand 38 in Reihe mit einem Kondensator 39 besteht, ebenfalls in kurze Impulse umgewandelt, die an der Parallelschaltung aus dem Widerstand 34 und der Diode 35 und somit an der Basis des Transistors 36 anliegen. Wie in dem zuvor beschriebenen Fall der vom Differenzierglied 31 aus dem Rechtecksignal A erzeugten kurzen Impulse verursachen auch die den ansteigenden Flanken des Rechtecksignals B entsprechenden positiv gerichteten Impulse kurze negativ gerichtetete Impulse am Kollektor des Transistors 36, während die den abfallenden Flanken des Rechtecksignals B entsprechenden negativ gerichteten Impulse unterdrückt werden. Der Transistor 36 wirkt als Vereinigungsschaltung, die die von den beiden Differenziergliedern 31 und 37 erzeugten Impulsfolgen zu einer kombinierten Impulsfolge vereinigt, die die Ausgangsimpulsfolge C bildet.

Ferner enthält die Anordnung von Fig. 1 eine Steuerschaltung 50, die ein Steuersignal D zur Betätigung des Schalters 26 liefert. Das gleiche Steuersignal D wird auch der Auswerteschaltung 25 zugeführt. Der Schalter 26, der in der Zeichnung symbolisch durch einen mechanischen Schaltkontakt dargestellt ist, ist vorzugsweise ein schneller elektronischer Schalter, beispielsweise ein Feldeffekttransistor. Das Steuersignal D, das im Diagramm D von Fig. 2 dargestellt ist, ist ein binäres Signal, das wahlweise einen niedrigen oder einen hohen Signalwert annehmen kann. Bei dem dargestellten Ausführungsbeispiel ist angenommen, daß der Schalter 26 geschlossen ist, wenn das Steuersignal D den niedrigen Signalwert hat, und daß er geöffnet wird, wenn das Steuersignal D den hohen Signalwert annimmt.

Während des normalen Meßbetriebs erteilt die Steuerschaltung 50 dem Steuersignal D den niedrigen Signalwert, so daß der Schalter 26 geschlossen ist. In diesem Zustand, der im linken Teil der Diagramme von Fig. 2 dargestellt ist, liegt der Sensor 10 in dem geschlossenen Rückkopplungskreis der Verstärkerschaltung 20, so daß er in der zuvor beschriebenen Weise zu Schwingungen mit seiner Eigenresonanzfrequenz angeregt wird. Die Spannung am Anschluß 18 ist dann mit der Ausgangsspannung der Verstärkerschaltung identisch, und demzufolge ist die am Ausgang der Verstärkerschaltung 40 abgegebene Rechteckspannung B in Phase mit der Rechteckspannung A am Ausgang der Verstärkerschaltung 20. Die vom Differenzierglied 31 erzeugten kurzen Impulse, die den Flanken des Rechtecksignals A entsprechen, fallen daher zeitlich mit den vom Differenzierglied 37 erzeugten kurzen Impulsen zusammen, die den Flanken des Rechtecksignals B entsprechen. Die vom Ausgang der Differenzierschaltung 30 zur Auswerteschaltung 25 gelieferte Impulsfolge C ist daher in diesem Betriebszustand identisch mit der Impulsfolge, die geliefert würde, wenn die Verbindung vom Anschluß 18 über die Verstärkerschaltung 40 zur Differenzierschaltung 30 nicht vorhanden wäre. Die Auswerteschaltung 25, die durch das von der Steuerschaltung 50 gelieferte Steuersignal D darüber informiert ist, daß die Überwachungsanordnung im normalen Meßbetrieb arbeitet, kann daher die Schwingungsfrequenz des Füllstandssensors 10 in der zuvor beschriebenen Weise aus der Impulsfolge C ermitteln, beispielsweise durch Abzählen der in vorbestimmten Zeitintervallen auftretenden Impulse.

Die Steuerschaltung 50 kann die Überwachungsanordnung von dem normalen Meßbetrieb dadurch auf einen Testbetrieb umschalten, daß sie dem Steuersignal D den hohen Signalwert erteilt, so daß der Schalter 26 geöffnet wird. Dadurch wird die Anregung der mechanischen Schwingungen des Füllstandssensors 10 durch die Verstärkerschaltung 20 unterbrochen, doch schwingt das mechanische Schwingsystem 11 mit allmählich abklingender Schwingungsamplitude zunächst noch weiter. Der Empfangswandler 13 liefert daher weiterhin eine Wechselspannung zur Verstärkerschaltung 20, so daß die Rechteckspannung A an deren Ausgang zunächst noch fortbesteht. Der Erregungswandler 12 arbeitet aber nunmehr ebenfalls als Empfangswandler, so daß er vom Anschluß 18 zur Verstärkerschaltung 40 eine Wechselspannung liefert, die mit der vom Empfangswandler 13 am Anschluß 19 abgegebenen Wechselspannung frequenz- und phasengleich ist. Da jedoch der Wechselspannung in der Verstärkerschaltung 40 keine Phasenverschiebung erteilt wird, während der Wechselspannung in der Verstärkerschaltung 20 eine Phasenverschiebung von 90° erteilt wird, weist das am Ausgang der Verstärkerschaltung 40 abgegebene Rechtecksignal B gegenüber dem am Ausgang der Verstärkerschaltung 20 abgegebenen Rechtecksignal A eine Phasenverschiebung von 90° auf, wie dies aus dem rechten Teil der Diagramme von Fig. 2 ersichtlich ist. Demzufolge fallen die Flanken der Rechtecksignale und somit auch die von den Differenziergliedern 31 und 37 aus den Rechtecksignalen abgeleiteten Impulse zeitlich nicht mehr zusammen. In der von der Differenzierschaltung 30 zur Auswerteschaltung 25 gelieferten kombinierten Impulsfolge C erscheinen daher die vom Rechtecksignal A stammenden Impulse und die vom Rechtecksignal B stammenden Impulse getrennt mit einer gegenseitigen Phasenverschiebung. Wenn die Auswerteschaltung 25 die Schwingungsfrequenz durch Abzählen der in bestimmten Zeitintervallen auftretenden Impulse bestimmt, wird sie daher nunmehr in jedem Zeitintervall gegenüber dem normalen Meßbetrieb die doppelte Impulszahl zählen und somit die doppelte Frequenz messen.

Da jedoch die Auswerteschaltung ebenfalls das Steuersignal D mit dem hohen Signalwert empfängt, ist sie darüber informiert, daß die Überwachungsanordnung nunmehr im Testbetrieb arbeitet, und sie kann die Veränderung der Impulsfolge C zu Prüfzwecken auswerten. So erkennt die Überwachungsanordnung einen Fehler der Anordnung, wenn im Testbetrieb nicht die doppelte Impulszahl auftritt. Wenn zwar die doppelte Impulszahl auftritt, die Impulse aber eine von 90° verschiedene Phasenverschiebung aufweisen, können aus der Größe der Phasenverschiebung bestimmte Fehler, wie ein Driften der Bauteile, erkannt und bewertet werden

Da der Testbetrieb nur solange möglich ist, wie das mechanische Schwingsystem des Füllstandssensors noch mit ausreichender Amplitude ausschwingt, wird der Testbetrieb vorzugsweise auf relativ kurze Testintervalle beschränkt. Dies ergibt den weiteren Vorteil, daß die Füllstandsüberwachung praktisch nicht unterbrochen wird, da die Schwingungsfrequenz auch während des Testbetriebs aus den gelieferten Rechtecksignalen ermittelt werden kann, wenn kein Fehler vorliegt. Die Auslösung der Testintervalle kann entweder automatisch in vorbestimmten Zeitabständen oder je nach Bedarf von Hand erfolgen.

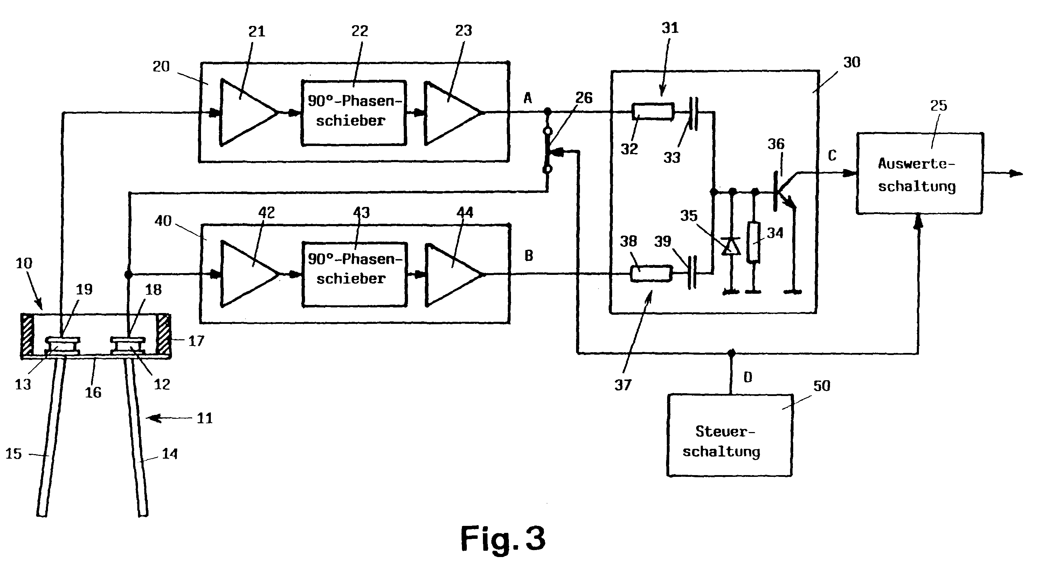

In Fig. 3 ist eine abgeänderte Ausführungsform der Überwachungsanordnung dargestellt, und die Diagramme von Fig. 4 zeigen den zeitlichen Verlauf der entsprechenden Signale in gleicher Weise wie in Fig. 2. Die einander entsprechenden Bauteile und Signale sind in Fig. 3 in gleicher Weise wie in Fig. 1 bezeichnet und werden nicht nochmals beschrieben. Die Anordnung von Fig. 3 unterscheidet sich von derjenigen von Fig. 1 nur durch eine andere Ausbildung der Verstärkerschaltung 40: diese enthält nunmehr in gleicher Weise wie die Verstärkerschaltung 20 einen Vorverstärker 42, einen 90°-Phasenschieber 43 und einen Endverstärker 44. Da somit der vom Anschluß 18 gelieferten Wechselspannung eine Phasenverschiebung von 90° erteilt wird, ergibt sich der aus den Diagrammen von Fig. 4 ersichtliche Unterschied in der Phasenlage der Rechtecksignale A und B: im normalen Meßbetrieb weist das Rechtecksignal B eine Phasenverschiebung von 90° gegenüber dem Rechtecksignal A auf, und demzufolge erscheinen die von den beiden Rechtecksignalen A und B stammenden Impulse mit einer gegenseitigen Phasenverschiebung von 90° getrennt in der Ausgangsimpulsfolge C; im Testbetrieb sind dagegen die Rechtecksignale A und B gleichphasig, so daß die von ihnen stammenden Impulse zeitlich zusammenfallen, wenn kein Fehler vorliegt. Es ist unmittelbar zu erkennen, daß bei dieser Ausführungsform die Füllstandsüberwachung und die Fehlererkennung in gleicher Weise wie bei der Ausführungsform von Fig. 1 möglich ist: Im normalen Meßbetrieb kann die Schwingungsfrequenz natürlich auch aus der doppelten Impulszahl einwandfrei ermittelt werden, und im Testbetrieb wird das Bestehen eines Fehlers dadurch erkannt, daß die Impulszahl nicht halbiert wird, wobei die Art des Fehlers wieder auf Grund der Größe der Phasenverschiebung zwischen den Impulsen jedes Paares identifiziert werden kann. Die Ausführungsform von Fig. 3 ergibt gegenüber derjenigen von Fig. 1 den Vorteil, daß durch den 90°-Phasenschieber 43 mit Tiefpaßcharakter bei offenem Schalter 26 Signalanteile ausgefiltert werden, die durch die Übertragung von Körperschall (z. B. Vibrationen von Maschinen) vom Behälter zum Füllstandssensor 10 verursacht werden. Durch diese Maßnahme wird der Anwendungsbereich der Füllstandsüberwachungsanordnung beträchtlich erweitert.

Natürlich sind an den nur als Beispiel angegebenen Ausführungsformen Abänderungen möglich. So kann die Differenzierschaltung 30 auch auf andere Weise als mit RC-Gliedern ausgebildet sein, beispielsweise mit monostabilen Kippschaltungen, wie dies dem Fachmann geläufig ist. Ferner kann die Verbindung zwischen der Steuerschaltung 50 und der Auswerteschaltung 25 entfallen, da sich die Auswerteschaltung 25 mittels der Änderungen des Ausgangssignals C der Differenzierschaltung 30 auf den von der Steuerschaltung 50 erzeugten Umschalttakt synchronisieren kann. Es ist zu beachten, daß die Auswerteschaltung 25 oft in größerem Abstand von dem Füllstandssensor 10 angeordnet ist, während sich die übrigen Bestandteile der dargestellten Schaltung als Vorortelektronik am Ort des Füllstandssensors befinden. In solchen Fällen ist es günstig, wenn außer der Leitung für die Übertragung des Signals C keine weitere Leitung für die Übertragung des Steuersignals D zum Auswertegerät 25 benötigt wird.

In allen Fällen kann die Auswertung der Meßsignale auch auf andere Weise erfolgen als durch Umsetzung von Rechtecksignalen in Impulsfolgen. Wesentlich für die beschriebene Funktionsweise ist, daß in jedem Testintervall der Erregungskreis unterbrochen wird und ein Phasenvergleich zwischen dem Ausgangssignal des Empfangswandlers 13 und dem Ausgangssignal des dann ebenfalls als Empfangswandlers arbeitenden Erregungswandlers 12 durchgeführt wird. Bei diesem Phasenvergleich müssen natürlich Phasenänderungen berücksichtigt werden, die in den Signalwegen vorgenommen werden.

## Patentansprüche

1. Verfahren zur Feststellung und/oder Überwachung eines vorbestimmten Füllstands in einem Behälter mit Hilfe eines Füllstandssensors (10), der ein mechanisches Schwingsystem (11), einen elektromechanischen Erregungswandler (12) und einen elektromechanischen Empfangswandler (13) enthält, wobei das mechanische Schwingsystem (11) auf der Höhe des vorbestimmten Füllstands so angebracht ist, daß es mit dem Füllgut in Berührung kommt, wenn dieses den vorbestimmten Füllstand erreicht, und wobei der Empfangswandler (13) mit dem Eingang einer Verstärkerschaltung (20) verbunden ist, an deren Ausgang der Erregungswandler (12) angeschlossen ist und die so ausgebildet ist, daß das mechanische Schwingsystem (11) zu Schwingungen mit seiner Eigenresonanzfrequenz erregt wird, und mit einer an den Ausgang der Verstärkerschaltung (20) angeschlossenen Auswerteschaltung (25) zur Auslösung von Anzeige- und/oder Schaltvorgängen in Abhängigkeit von der Frequenz des Ausgangssignals der Verstärkerschaltung (20), dadurch gekennzeichnet, daß die Verbindung zwischen dem Ausgang der Verstärkerschaltung (20) und dem Erregungswandler (12) während vorbestimmter Testintervalle kurzzeitig höchstens für die Dauer des Ausschwingens des mechanischen Schwingsystems (11) unterbrochen wird und daß in jedem Testintervall zwischen dem Ausgangssignal der Verstärkerschaltung (20) und einem am Erregungswandler (12) abgegriffenen Signal ein Phasenvergleich zur Erkennung von Fehlern in der Meßlinie durchgeführt wird.

2. Verfahren nach Anspruch 1, dadurch gekennzeichnet, daß das Ausgangssignal der Verstärkerschaltung (20) in eine Impulsfolge umgewandelt wird, deren Folgefrequenz gleich der Frequenz des Ausgangssignals ist und die der Auswerteschaltung (25) zugeführt wird, daß das am Erregungswandler (12) abgegriffene Signal gleich falls in eine Impulsfolge umgewandelt wird, daß die beiden Impulsfolgen zu einer kombinierten Impulsfolge vereinigt wer den, die der Auswerteschaltung (25) zugeführt wird, und daß die Auswerteschaltung (25) den Phasenvergleich an Hand der in der kom binierten Impulsfolge vorhandenen Impulse durchführt.

3. Anordnung zur Durchführung des Verfahrens nach Anspruch 1 oder 2, mit einem Füllstandssensor (10), der ein mechanisches Schwingsystem (11), einen elektromechanischen Erregungswandler (12) und einen elektromechanischen Empfangswandler (13) enthält, wobei das mechanische Schwingsystem (11) auf der Höhe des vorbestimmten Füllstands so angebracht ist, daß es mit dem Füllgut in Berührung kommt, wenn dieses den vorbestimmten Füllstand erreicht, und wobei der Empfangswandler (13) mit dem Eingang einer Verstärkerschaltung (20) verbunden ist, an deren Ausgang der Erregungswandler (12) angeschlossen ist und die so ausgebildet ist, daß das mechanische Schwingsystem (11) zu Schwingungen mit seiner Eigenresonanzfrequenz erregt wird, und mit einer an den Ausgang der Verstärkerschaltung (20) angeschlossenen Auswerteschaltung (25) zur Auslösung von Anzeige- und/oder Schaltvorgängen in Abhängigkeit von der Frequenz des Ausgangssignals der Verstärkerschaltung (20), dadurch gekennzeichnet, daß in die Verbindung zwischen dem Ausgang der Verstärkerschaltung (20) und dem Erregungswandler (12) ein Schalter (26) eingefügt ist, daß eine Steuerschaltung (50) vorgesehen ist, die den Schalter (26) während vorbestimmter Testintervalle kurzzeitig höchstens für die Dauer des Ausschwingens des mechanischen Schwingsystems öffnet, und daß die Auswerteschaltung (25) so ausgebildet ist, daß sie in jedem Testintervall zwischen dem Ausgangssignal der Verstärkerschaltung (20) und einem am Erregungswandler (12) abgegriffenen Signal einen Phasenvergleich zur Erkennung von Fehlern in der Meßlinie durchführt.

4. Anordnung nach Anspruch 3, dadurch gekennzeichnet, daß der Ausgang der Verstärkerschaltung (20) und der Anschluß des Erregungswandlers (12) jeweils über ein Differenzierglied (31, 37) mit einer Vereinigungsschaltung (36) verbunden sind, deren Ausgangssignal der Auswerteschaltung (25) zugeführt wird.

5. Anordnung nach Anspruch 3 oder 4, dadurch gekennzeichnet, daß der Anschluß des Erregungswandlers (12) mit dem Eingang einer zweiten Verstärkerschaltung (40) verbunden ist, deren Ausgangssi gnal für den Phasenvergleich verwendet wird.

6. Anordnung nach Anspruch 5, dadurch gekennzeichnet, daß die zweite Verstärkerschaltung (40) so ausgebildet ist, daß sie dem verstärkten Signal die gleiche Phasenverschiebung erteilt wie die erste Verstärkerschaltung (20), in deren Rückkopplungskreis der Füllstandsdetektor (10) liegt.

## Claims

1. Method for determining and/or monitoring a predetermined level of material in a container with the help of a level sensor (10) having a mechanical oscillatory system (11), an electromechanical excitation transducer (12) and an electromechanical reception transducer (13), the mechanical oscillatory system (11) being mounted at the height of the predetermined level of material in such a way that it comes into contact with the material when the material reaches the predetermined level, and the reception transducer (13) being connected to the input of an amplifier circuit (20), whose output is connected to the excitation transducer (12) and which is designed in such a way that the mechanical oscillatory system is excited to oscillate at its self-resonant frequency, an evaluation circuit (25) being connected to the output of the amplifier circuit (20) for causing display and/or switching operations depending on the frequency of the output signal of the amplifier circuit (20), characterized in that the connection between the output of the amplifier circuit (20) and the excitation transducer (12) is interrupted briefly during predetermined test intervals for the duration of the delay time of said mechanical oscillatory system (11), and that a phase comparison is carried out in each test interval between the output signal of the amplifier circuit (20) and a signal picked up at the excitation transducer (12), in order to recognize faults in the measuring line.

2. Method in accordance with claim 1, characterized in that the output signal of the amplifier circuit (20) is converted into a pulse train whose repetition frequency is identical with the frequency of the output signal and which is supplied to the evaluation circuit (25), that the signal picked up at the excitation transducer (12) is also converted into a pulse train, that the two pulse trains are combined to form a combined pulse train which is applied to the evaluation circuit (25), and that the evaluation circuit (25) carries out the phase comparison on the basis of the pulses in the combined pulse train.

3. Arrangement for implementing the method in accordance with claim 1 or claim 2, comprising a level sensor (10) containing a mechanical oscillatory system (11), an electromechanical excitation transducer (12) and an electromechanical reception transducer (13), the mechanical oscillatory system (11) being mounted at the height of the predetermined level of material in such a way it comes into contact with the material when the material reaches the predetermined level, and the reception transducer (13) being connected to the input of an amplifier circuit (20), whose output is connected to the excitation transducer (12) and which is designed in such a way that the mechanical oscillatory system (11) is excited to oscillate at its self-resonant frequency, an evaluation circuit (20) being connected to the output of the amplifier circuit (20) for causing display and/or switching operations depending on the frequency of the output signal of the amplifier circuit (20), characterized in that a switch (26) is inserted in the connection between the output of the amplifier circuit (20) and the excitation transducer (12), that a control circuit (50) is provided for opening the switch briefly during predetermined test intervals for the duration of the delay time of said mechanical oscillatory system (11), and that the evaluation circuit (20) is designed in such a way that it carries out a phase comparison in each test interval between the output signal of the amplifier circuit (20) and a signal picked up at the excitation transducer (12), in order to recognize faults in the measuring line.

4. Arrangement in accordance with claim 3, characterized in that the output of the amplifier circuit (20) and the terminal of the excitation transducer (12) are each connected via a differentiating element (31, 37) to a combination circuit (36) whose output signal is supplied to the evaluation circuit (25).

5. Arrangement in accordance with claim 3 or claim 4, characterized in that the terminal of the excitation transducer (12) is connected to the input of a second amplifier circuit (40) whose output signal is used for the phase comparison.

6. Arrangement in accordance with claim 5, characterized in that the second amplifier circuit (40) is designed so that it imparts to the amplified signal the same phase shift as the first amplifier circuit (20), in the feedback loop of which the material level sensor (10) is inserted.

## Revendications

1. Procédé de constatation et/ou de surveillance d'un niveau de remplissage prédéfini dans un conteneur à l'aide d'un capteur de niveau de remplissage (10) qui contient un système oscillant mécanique (11), un transformateur d'excitation électromécanique (12) et un transformateur de réception électromécanique (13), le système oscillant mécanique (11) étant disposé à la hauteur du niveau de remplissage prédéfini de manière qu'il entre en contact avec le contenu lorsque celui-ci atteint le niveau de remplissage prédéfini, et le transformateur de réception (13) étant relié à l'entrée d'un montage amplificateur (20), à la sortie duquel le transformateur d'excitation (12) est relié, et qui est conçu de manière que le système oscillant mécanique (11) soit excité et produise des oscillations suivant sa fréquence de résonance propre, et un circuit d'exploitation (25) relié à la sortie du montage amplificateur (20) pour déclencher des processus de signalisation et/ou de commutation selon la fréquence du signal de sortie du montage amplificateur (20), caractérisé en ce que la liaison entre la sortie du montage amplificateur (20) et le transformateur d'excitation (12) est brièvement interrompue lors de l'intervalle d'essai prédéfini, au plus pendant la durée de l'amortissement de l'oscillation du système oscillant mécanique (11), et en ce que, dans chaque intervalle d'essai entre le signal de sortie du montage amplificateur (20) et un signal issu du transformateur d'excitation (12), une comparaison de phase est effectuée pour détecter les erreurs dans la ligne de mesure.

2. Procédé selon la revendication 1, caractérisé en ce que le signal de sortie du montage amplificateur (20) est converti en une série d'impulsions, dont la fréquence de répétition équivaut à la fréquence du signal de sortie, et qui est introduite dans le circuit d'exploitation (25), en ce que le signal issu du transformateur d'excitation (12) est également converti en une série d'impulsions, en ce que les deux séries d'impulsions sont jointes en une série d'impulsions combinée, qui est introduite dans le circuit d'exploitation (25), et en ce que le circuit d'exploitation (25) effectue la comparaison de phase à l'aide des impulsions présentes dans la série d'impulsions combinée.

3. Agencement pour l'exécution du procédé selon la revendication 1 ou 2, comprenant un capteur de niveau de remplissage (10) qui contient un système oscillant mécanique (11), un transformateur d'excitation électromécanique (12) et un transformateur de réception électromécanique (13), le système oscillant mécanique (11) étant disposé à la hauteur du niveau de remplissage prédéfini de manière qu'il entre en contact avec le contenu, lorsque celui-ci atteint le niveau de remplissage prédéfini, et le transformateur de réception (13) étant relié à l'entrée d'un montage amplificateur (20), à la sortie duquel le transformateur d'excitation (12) est relié, et qui est conçu de manière que le système oscillant mécanique (11) est excité et produit des oscillations suivant sa fréquence de résonance propre, et un circuit d'exploitation relié à la sortie du montage amplificateur (20) pour déclencher des processus de signalisation et/ou de commutation selon la fréquence du signal de sortie du montage amplificateur (20), caractérisé en ce qu'un commutateur (26) est inséré dans la liaison entre la sortie du montage amplificateur (20) et le transformateur d'excitation (12), en ce qu'un circuit de commande (50) est prévu pour ouvrir brièvement le commutateur (26) lors d'intervalles d'essai prédéfinis, au plus pendant la durée de l'amortissement de l'oscillation du système oscillant mécanique, et en ce que le circuit d'exploitation (25) est conçu de manière à effectuer, lors de chaque intervalle d'essai entre le signal de sortie du montage amplificateur (20) et un signal issu du transformateur d'excitation (12), une comparaison de phase pour détecter les erreurs dans la ligne de mesure.

4. Agencement selon la revendication 3, caractérisé en ce que la sortie du montage amplificateur (20) et la connexion du transformateur d'excitation (12) sont respectivement reliées par un comparateur (31, 37) à un circuit de jonction (36), dont le signal de sortie est introduit dans le circuit d'exploitation (25).

5. Agencement selon la revendication 3 ou 4, caractérisé en ce que la connexion du transformateur d'excitation (12) est reliée à l'entrée d'un second montage amplificateur (40) dont le signal de sortie est utilisé pour la comparaison de phase.

6. Agencement selon la revendication 5, caractérisé en ce que le second montage amplificateur (40) est conçu de manière à délivrer au signal amplifié le même décalage de phase que le premier montage amplificateur (20), dans lequel se situe le circuit de rétroaction du détecteur de niveau de remplissage.
